# EUROPÄISCHE PATENTSCHRIFT

(11) **EP 1 804 008 B1**
(45) Veröffentlichungstag und Bekanntmachung des Hinweises auf die Patenterteilung: **13.06.2012**
(21) Anmeldenummer: 06024948.9
(22) Anmeldetag: 01.12.2006
(51) Int. Cl.: E04D 13/18

(54) **Dach-Befestigungsvorrichtung-Kombination**
Combination of a fastening device with a roof
Combinaison d'un dispositif de fixation avec un toit

(30) Priorität: 05.12.2005 DE 202005019022 U; 18.04.2006 DE 202006006292 U; 17.09.2006 DE 202006014469 U
(43) Veröffentlichungstag der Anmeldung: 04.07.2007
(73) Patentinhaber: IDEEMATEC Deutschland GmbH, 94574 Wallerfing (DE)
(72) Erfinder: Kufner, Johann, 94527 Aholming/Tabertshausen (DE)
(74) Vertreter: advotec.

(56) Entgegenhaltungen:
- DE-A1- 19 616 587
- GB-A- 2 089 864
- JP-A- 9 291 659
- JP-A- 11 081 565
- JP-A- 11 311 003
- JP-A- 11 324 246
- JP-A- 2003 253 827
- US-A- 3 886 560
- US-A- 5 456 433
- US-A1- 4 371 139
- US-A1- 5 681 021
- US-A1- 2002 046 506
- US-A1- 2004 216 399

## Beschreibung

Die Erfindung betrifft eine Dach-Befestigungsvorrichtungs-Kombination, umfassend ein Blechdach, mindestens einen unter dem Blechdach positionierten Dachbalken sowie eine Befestigungsvorrichtung zum Befestigen des Blechdaches und eines darauf positionierten Gegenstandes, insbesondere eines Solarmoduls oder einer Fotovoltaikanlage, wobei die Befestigungsvorrichtung mindestens ein Dachbefestigungselement mit einem Kopf umfasst, mittels dessen das Blechdach an dem mindestens einen Dachbalken befestigt ist, wobei der Kopf des in den Dachbalken eingetriebenen Dachbefestigungselements von der Außenfläche des Blechdaches nach oben vorsteht, wobei die Befestigungsvorrichtung ferner eine auf das Blechdach aufsetzbare und mittels mindestens eines stiftförmigen Befestigungselements am Dach anbringbare Haltekonsole umfasst, an der ein Halteelement zum Verankern des zu befestigenden Gegenstandes vorgesehen ist und deren Profil im Querschnitt gesehen demjenigen des Daches entspricht.

Eine sattelförmige Haltekonsole für Trapezblechdächer, welche direkt auf das Dachprofil aufgeschraubt wird, gehört bereits zum Stand der Technik. Allerdings kann diese Haltekonsole nicht direkt über einer Dachbefestigungsschraube angebracht werden, da der nach oben vorstehende Schraubenkopf dies verhindert. Gerade diese Stelle wäre aber für die Konsolenanbringung besonders günstig, da der darunterliegende Dachbalken bzw. die darunterliegende Dachkonstruktion den statischen Druck, welchen die an der Haltekonsole befestigte Anlage ausübt, direkt aufnehmen und ableiten kann. Vielmehr muss die bekannte Haltekonsole an einer gegenüber einer Dachbefestigungsschraube versetzten Position am Dach angebracht werden, was zur Instabilität bei Windbelastung führen kann, da die Dachprofile starken Torsionskräften ausgesetzt werden. Auch können die Schraubdichtungen dadurch leicht zu Undichtigkeiten führen.

Ein weiteres bekanntes Montagesystem besteht darin, eine vorhandene Dachbefestigungsschraube gegen eine Stockschraube auszutauschen. Dies führt aber in vielen Fällen dazu, dass die vorhandene Dachbefestigungsschraube schwierig zu entfernen ist bzw. bei ihrem Herausdrehen sogar abbricht. Darüber hinaus ist ein genaues Ausrichten der an die Stelle der Dachbefestigungsschraube eingedrehten Stockschraube schwierig oder gar nicht möglich, da das alte eingedrehte Gewinde eine derartige axiale Ausrichtung der Stockschraube verhindert.

US 2002/046506 A1 beschreibt ein Montagesystem zum Anbringen von Solarpaneelen oder Antennen auf einem Dach. Das hier beschriebene Montagesystem wird mit einer einzigen Befestigungsschraube an einem Dachsparren befestigt. Eventuell weiter vorhandene Befestigungsschrauben, die eine Abdeckhaube mit einer Dachplatte verbinden, werden nicht in den Dachsparren getrieben.

US 3886560 beschreibt eine Antennenbefestigung. Bei dieser Befestigung ist kein Dachbefestigungselement vorgesehen.

US 5456433 beschreibt ebenfalls eine Antennenbefestigung. Auch bei dieser Befestigung sind keine Dachbefestigungselemente offenbart.

Ausgehend von einem Stand der Technik, wie er durch die bekannte Haltekonsole dokumentiert ist, liegt der vorliegenden Erfindung die Aufgabe zugrunde, eine Dach-Befestigungsvorrichtungs-Kombination zum Befestigen von Gegenständen auf Blechdächern zu schaffen, bei der eine Haltekonsole direkt über den nach oben vorstehenden Kopf eines Dachbefestigungselementes gelegt und in dieser Position am darunter liegenden Dachbalken im unmittelbaren Bereich dieses Dachbefestigungselementes am Dach selbst verankert ist. Diese Aufgabe ist durch die im Kennzeichen des beiliegenden Anspruches 1 gekennzeichneten Maßnahmen gelöst.

Vorzugsweise handelt es sich bei dem Blechdach um ein Trapezblech-, Wellblech- oder Flachdach. Das Dachbefestigungselement ist vorzugsweise eine Dachbefestigungsschraube, gegebenenfalls in Kombination mit einer von dieser Schraube durchdrungenen Haltekalotte. Auch das mindestens eine stiftförmige Befestigungselement ist vorzugsweise eine Befestigungsscchraube.

Durch die erfindungsgemäß nach oben vorstehende Aufnahmekammer an der Haltekonsole wird der Vorteil erreicht, dass diese Aufnahmekammer den Kopf eines Dachbefestigungselementes aufnehmen kann, wenn die Haltekonsole direkt über diesen Kopf auf das Dach aufgelegt wird. Es besteht dann die Möglichkeit, die zum Anbringen der Haltekonsole am Dach dienenden stiftförmigen Befestigungselemente durch die Wandung der Aufnahmekammer hindurch in den Dachbalken einzutreiben, in welchem bereits das betreffende Dachbefestigungselement verankert ist. In diesen Fall liegen die Verankerungspunkte dieser stiftförmigen Befestigungselemente in unmittelbarer Nähe des betreffenden Dachbefestigungselementes bzw. der betreffenden Dachbefestigungsschraube, sodass die Haltekonsole optimal abgestützt ist und der von ihr ausgeübte statische Druck direkt und unmittelbar in die darunter liegende Dachkonstruktion abgeleitet werden kann.

Zusammenfassend ist festzustellen, dass aufgrund der Tatsache, dass eine erfindungsgemäße Haltekonsole mit ihrer Aufnahmekammer direkt über eine vorhandene Dachschraube auf das Dachprofil aufgelegt werden kann, auf diese Weise die optimale Befestigungsposition der Konsole erreichbar ist, was beim Stand der Technik nicht realisiert werden kann.

Gemäß beiliegendem Anspruch 2 weist für den Fall der Hindurchführung des oder der stiftförmigen Befestigungselemente durch die Wandung der Aufnahmekammer dieselbe entsprechende Bohrungen auf, die entweder werkseitig oder während der Montage der Vorrichtung eingearbeitet werden können.

Gemäß den Ansprüchen 3 und 4 kann bei montierter Haltekonsole entweder zwischen dem Kopf des von der Aufnahmekammer aufgenommenen Dachbefestigungselementes und der oberen Innenfläche der Aufnahmekammer ein Abstand vorhanden sein, oder die montierte Haltekonsole kann sich mit einer dem Dach zugewandten Abstützfläche auf dem Kopf des von der Aufnahmekammer aufgenommenen Dachbefestigungselementes abstützen. Im letzteren Falle wird der Vorteil erreicht, dass der gesamte statische Druck einer an der Konsole montierten Anlage direkt auf das Dachbefestigungselement übertragen wird, sodass die Konsole und auch das Dach selbst einer wesentlich geringeren Belastung ausgesetzt ist.

Die Ansprüche 5 und 6 beschreiben, wie die Abstützfläche an der Aufnahmekammer ausgebildet sein kann. Bei Vorsehen eines Gewindebolzens gemäß Anspruch 6 kann derselbe das Haltelement zum Verankern des an der Konsole zu befestigenden Gegenstandes bilden.

Die Ansprüche 7 und 8 beschreiben eine zweckmäßige und vorteilhafte Möglichkeit, auf welche Weise der Gewindebolzen in die Wandung der Aufnahmekammer eingeschraubt und dann in seiner eingestellten Position fixiert werden kann.

Die weiteren Ansprüche 9 - 11 kennzeichnen vorteilhafte Abdichtungsmöglichkeiten der Konsole gegenüber dem Dach.

Während eine erfindungsgemäße Haltekonsole in Anwendung bei Flachdächern entsprechend flach und plattenförmig ausgeführt ist, wobei aus der Plattenebene die erfindungsgemäße Aufnahmekammer nach oben vorsteht, ist die Haltekonsole bei Wellblech - bzw. Trapezblech - Dächern so ausgebildet, wie dies im beiliegenden Anspruch 12 unter Schutz gestellt ist.

Die Maßnahmen des Anspruches 13 ermöglichen dabei bei einem Trapezblech - Dach die Anpassung einer erfindungsgemäßen Haltekonsole an unterschiedliche Trapezbreiten, während der Gegenstand des Anspruches 14 eine vorteilhafte konstruktive Maßnahme kennzeichnet, einen als Abstützfläche auf dem zugehörigen Dachbefestigungselement dienenden Gewindebolzen an einer solchen in der Breite anpassbaren Haltekonsole vorzusehen.

Die Ansprüche 15 und 16 beschreiben Abdichtungsmöglichkeiten einer auf einem Wellblech - oder Trapezblech - Dach aufsitzenden erfindungsgemäßen Haltekonsole, wobei die Abdichtungsmaßnahme gemäß Anspruch 15 bereits ausreichend sein kann, da das Regenwasser an den Seitenschenkel der sattelförmigen Haltekonsole nach unten abläuft, sodass Dichtungen längs des äußeren Randbereiches der beiden Seitenschenkel der Konsole gegebenenfalls unnötig sind.

Die Ansprüche 17 - 19 beschreiben, auf welche zweckmäßige Weise die stiftförmigen Befestigungselemente durch die Aufnahmekammer einer erfindungsgemäßen Haltekonsole in die darunterliegende Dachkonstruktion eingetrieben werden können. Dabei stellt die im Anspruch 17 beanspruchte diagonale Versetzung der Befestigungselemente eine weitgehend gleichmäßige Andruckverteilung der Haltekonsole in Richtung zum Dach hin sicher, während die Maßnahmen gemäß Anspruch 19 insbesondere dann von Vorteil sind, wenn der darunterliegende Dachbalken bzw. die darunterliegende Dachkonstruktion eine relativ geringe Breite besitzt.

Der Gegenstand des Anspruches 20 stellt sicher, dass eine erfindungsgemäße Haltekonsole durch entsprechendes Verschieben auf dem Dachprofil leicht ausrichtbar ist, was von Vorteil bei der Montage der an der Haltekonsole zu befestigenden Gegenstände ist.

Die Ansprüche 21 und 22 beschreiben wie und aus welchen Materialien eine erfindungsgemäße Haltekonsole vorteilhafterweise hergestellt werden kann.

Der Anspruch 23 beschreibt ein Verfahren zum Befestigen mindestens eines Gegenstandes, insbesondere eines Solarmoduls oder einer Photovoltaikanlage auf einem Blechdach.

Die Erfindung wird unter Bezugnahme auf die beigefügten Zeichnungen auf der Grundlage von mehreren Ausführungsbeispielen noch näher erläutert. In den Zeichnungen, die nicht maßstäbliche Darstellungen repräsentieren, zeigen:
Figur 1a eine an einem Flachdach angebrachte erfindungsgemäße Befestigungsvorrichtung im Querschnitt,
Figur 1b die Vorrichtung von Figur 1a in Draufsicht,
Figur 2 eine der Figur 1a entsprechende Darstellung einer erfindungsgemäßen Befestigungsvorrichtung für ein Flachdach mit konstruktiven Abänderungen gegenüber der Darstellung von Figur 1a,
Figuren 3a und 3b eine weitere Ausführungsform einer erfindungsgemäßen Befestigungsvorrichtung für ein Flachdach, wobei diese beiden Figuren zwei aufeinanderfolgende Montageschritte zur Befestigung der erfindungsgemäßen Haltekonsole zeigen,
Figur 4 eine auf einem Wellblech - Dach befestigte Haltekonsole in perspektivischer Ansicht, die aber derjenigen der vorliegenden Erfindung nicht entspricht,
Figur 4a eine auf einem Trapezblech - Dach befestigte erfindungsgemäße Haltekonsole in Seitenansicht,
Figur 4b eine Stirnansicht der Haltekonsole von Figur 4a von links in Richtung der Trapezblech - Längserstreckung,
Figur 4c eine Schnittdarstellung längs der Schnittlinie I - I von Figur 4a,
Figur 4d eine Draufsicht auf die in den Figuren 4a - 4c dargestellte Befestigungsvorrichtung ohne eingedrehte Befestigungsschrauben,
Figur 5 eine der Figur 4a ähnliche Darstellung, wobei aber die sattelförmige Haltekonsole mit einem abstützenden Gewindebolzen versehen ist, die aber derjenigen der vorliegenden Erfindung nicht entspricht,
Figur 6a eine aus zwei Teilhälften bestehende und auf einem Trapezblech - Dach aufsitzende erfindungsgemäße Haltekonsole im Querschnitt, und
Figur 6b eine Schnittdarstellung längs der Schnittlinie II - II von Figur 6a.

In der folgenden Beschreibung sind einander entsprechende Bauteile mit den gleichen oder einander entsprechenden Bezugszeichen bezeichnet.

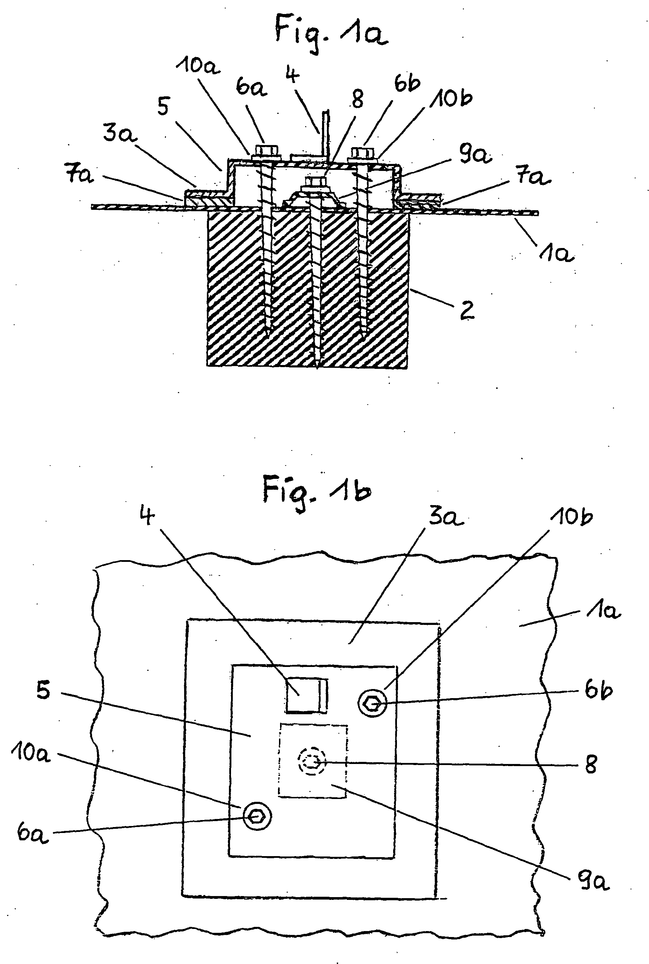

Bei der in den Figuren 1a und 1b dargestellten Ausführungsform einer erfindungsgemäßen Befestigungsvorrichtung sitzt eine plattenförmige Haltekonsole 3a mit einer im Querschnitt und in Draufsicht rechteckigen Aufnahmekammer 5 auf einem Flachdach 1a auf. Das Flachdach 1a ist mittels eines Dachbefestigungselementes in Form einer Dachbefestigungsschraube 8, die durch eine Haltekalotte 9a hindurchgeht, an einem darunterliegenden Dachbalken 2 befestigt. Der nach oben vorstehende Kopf der Dachbefestigungsschraube 8 mit Haltekalotte 9a wird dabei von der Aufnahmekammer 5 der Haltekonsole 3a aufgenommen, wobei durch die obere Wandung der Aufnahmekammer 5 zwei sich diametral gegenüber liegende stiftförmige Befestigungselemente in Form von Befestigungsschrauben 6a und 6b hindurchgeführt sind. Diese beiden Befestigungsschrauben sind ebenfalls in den Dachbalken 2 eingetrieben, wobei die Eintreiberichtung parallel zur Längsachse der Dachbefestigungsschraube 8 verläuft. Zur Abdichtung ist zwischen dem äußeren Randbereich der am Dach 1a mittels der Befestigungsschrauben 6a und 6b angebrachten Haltekonsole 3a und dem Dach 1a selbst eine umlaufende Dichtung 7a vorgesehen. Ein Halteelement in Form eines Haltewinkels 4 zum Verankern des zu befestigenden Gegenstandes ist an der Oberseite der Aufnahmekammer 5 fest angebracht. Zum Abdichten der Befestigungsschrauben 6a und 6b sind zwischen deren Köpfen und der Oberseite der Aufnahmekammer 5 entsprechende Dichtungsscheiben 10a und 10b vorgesehen, die gegen die ebene Oberseite der Aufnahmekammer 5 gedrückt werden. Wie ferner Figur 1a zeigt, ist zwischen dem Kopf der Dachbefestigungsschraube 8 und der oberen Innenfläche der Aufnahmekammer 5 ein Abstand vorhanden, der dazu dient, Variationen in der Kopfhöhe der Dachbefestigungsschrauben 8 bei der Dachmontage aufnehmen zu können.

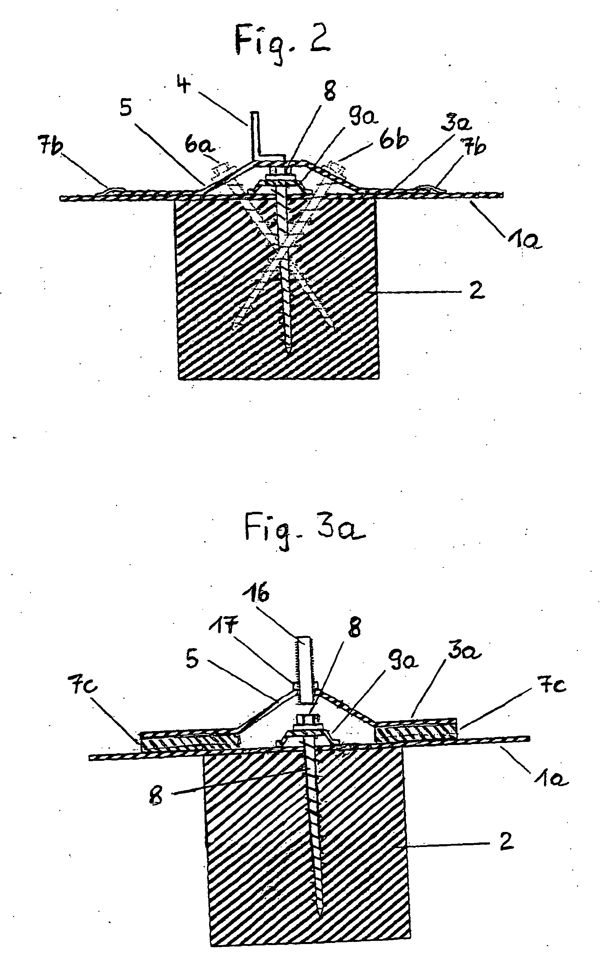

Das in Figur 2 dargestellte Ausführungsbeispiel unterscheidet sich von demjenigen gemäß den Figuren 1a und 1b im wesentlichen dadurch, dass die Aufnahmekammer 5 einen trapezförmigen Querschnitt besitzt, und dass sich die obere Innenfläche dieser Aufnahmekammer 5 auf dem Kopf der Dachbefestigungsschraube 8 abstützt. Ferner ruht die am Flachdach 1a angebrachte Haltekonsole 3a mit ihrem Randbereich direkt auf dem Dach auf, wobei an der stirnseitigen äußeren Randkante der Haltekonsole eine die Konsole gegen das Dach abdichtende Dichtung 7b vorgesehen ist. Ein weiterer Unterschied gegenüber der Ausführungsform der Figuren 1a und 1b besteht darin, dass die beiden Befestigungsschrauben 6a und 6b gegenüber der Dachbefestigungsschraube 8 in diagonal versetzter Anordnung schräg zur Längsachse dieser Dachbefestigungsschraube von oben nach unten in zueinander im Abstand parallelen Ebenen in den Dachbalken 2 eingeschraubt sind. Zwischen der schrägen Oberseite der Aufnahmekammer 5 und dem Kopf der Befestigungsschrauben 6a und 6b sind auch hier Dichtungsscheiben vorgesehen. Um dabei einen einwandfreien Dichtungseffekt zu erzielen, muss diese schräge Oberseite der Aufnahmekammer 5 zumindest im Bereich dieser Dichtungsscheiben plan oder plangeschliffen sein und im rechten Winkel zur Längsachse der Befestigungsschrauben 6a bzw. 6b verlaufen.

Es sei noch bemerkt, dass die Abstützung der Haltekonsole 3a auf dem Kopf der Dachbefestigungsschraube 8 eine statische Druckentlastung des Daches 1a mit sich bringt, da das Gewicht des vom Haltewinkel 4 gehaltenen Gegenstandes von der Dachbefestigungsschraube 8 aufgenommen wird.

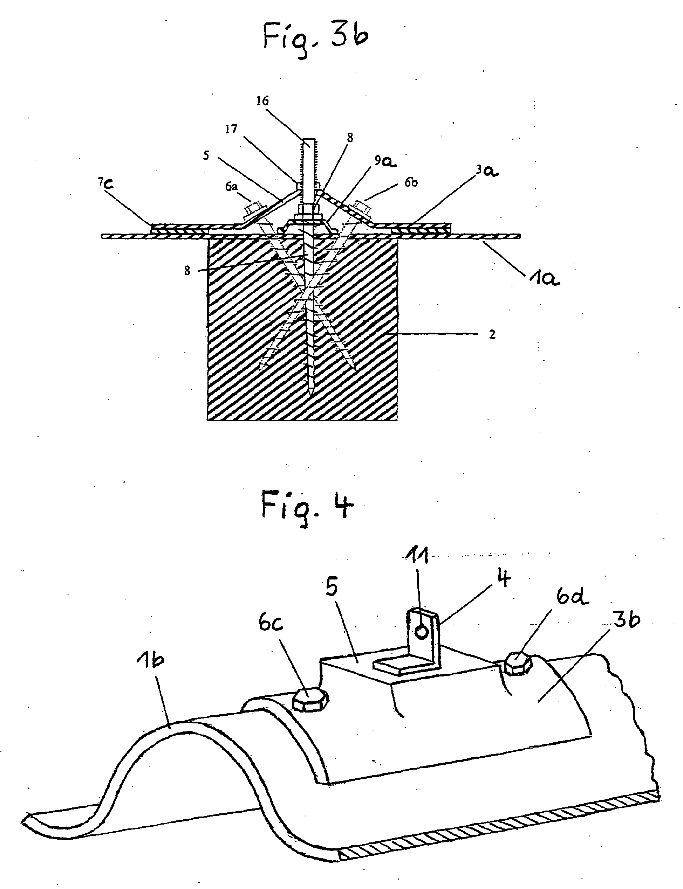

Bei der in den Figuren 3a und 3b dargestellten Ausführungsform besitzt die Aufnahmekammer 5 der verwendeten Haltekonsole 3a gleichfalls einen trapezförmigen Querschnitt und trägt einen sich von oben nach unten erstreckenden Gewindebolzen 16, welcher durch eine außen an der oberen Wandung der Aufnahmekammer 5 angebrachte Gewindemutter 17 hindurchschraubbar ist. Der Gewindebolzen 16 kann dann mit seinem unteren Ende durch eine axial deckungsgleiche Bohrung in der oberen Wandung der Aufnahmekammer 5 hindurchgeführt werden, wobei der Durchmesser dieser Bohrung mindestens gleich den Gewindeaußendurchmesser des Gewindebolzens 16 entspricht. Dabei sind bei der Darstellung der Figur 3a die Befestigungsschrauben 6a bzw. 6b zur Befestigung der Haltekonsole 3a am Flachdach 1a noch nicht in den Dachbalken 2 eingedreht. Die zusammendrückbare Dichtung 7c zwischen dem äußeren Randbereich der Konsole 3a und dem Flachdach 1a befindet sich daher noch im nicht zusammengedrückten expandierten Zustand, wodurch sich die untere Stirnfläche des Gewindebolzens 16 noch im Abstand von dem oberen Kopfende der Dachbefestigungsschraube 8 befindet. Mit dem Eindrehen der Befestigungsschrauben 6a und 6b in den Dachbalken 2 und dem daraus resultierenden Andrücken der Haltekonsole 3a gegen das Flachdach 1a wird die Dichtung 7c zusammengedrückt, sodass die untere Stirnfläche des Gewindebolzens 16 sich gegen das obere Kopfende der Dachbefestigungsschraube 8 anlegt und somit als Abstützfläche für den z.B. am Gewindebolzen 16 befestigten Gegenstand wirkt. Sollte bei zusammengedrückter Dichtung 7c und vollständig eingedrehten Befestigungsschrauben 6a und 6b noch ein Abstand zwischen Gewindebolzen 16 und dem Kopfende der Dachbefestigungsschraube 8 in Folge von Montagetoleranzen vorhanden sein, kann der Gewindebolzen manuell weiter eingedreht werden, bis derselbe auf der Dachbefestigungsschraube 8 aufsitzt. In dieser Stellung kann der Gewindebolzen durch eine hier nicht gezeigte Stopp - Mutter, die von oben auf den Bolzen bis zur Gewindemutter 17 hin aufschraubbar und festziehbar ist, fixiert werden.

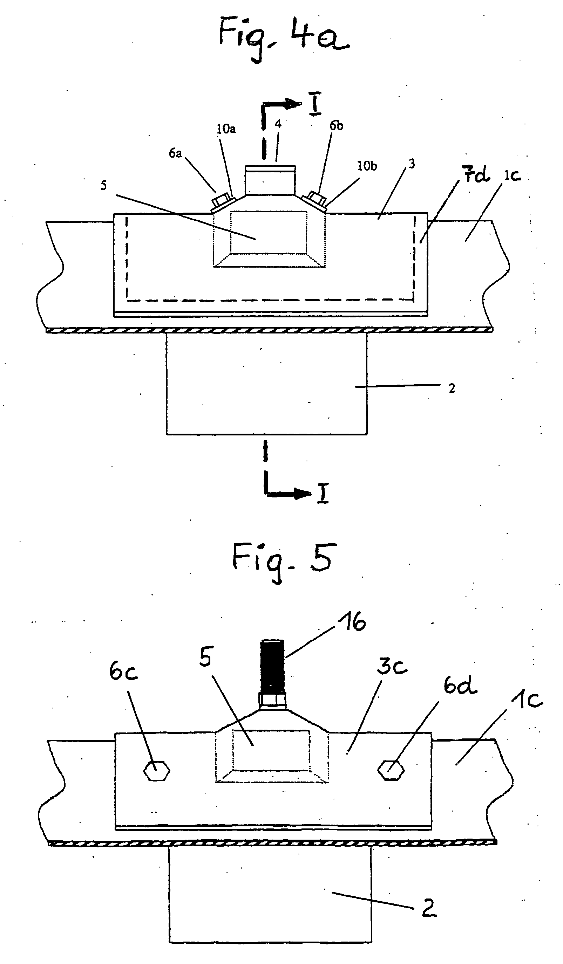

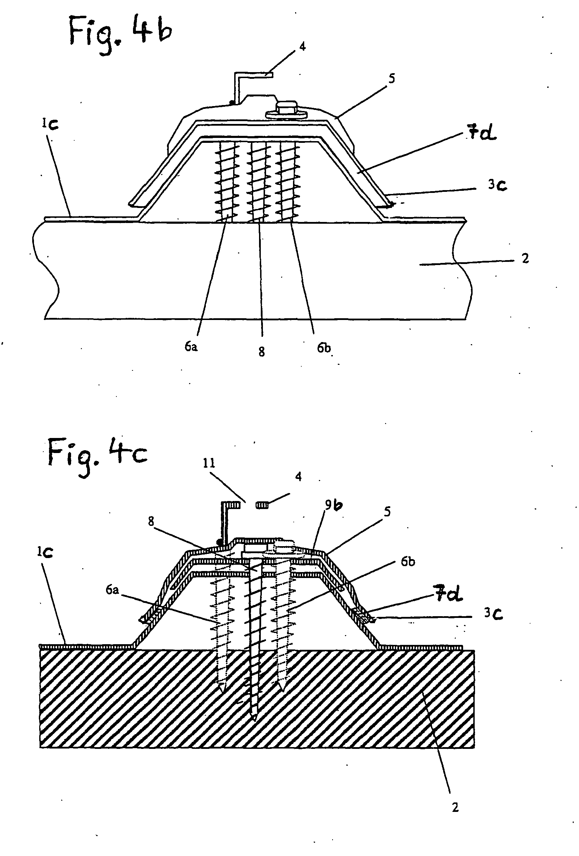

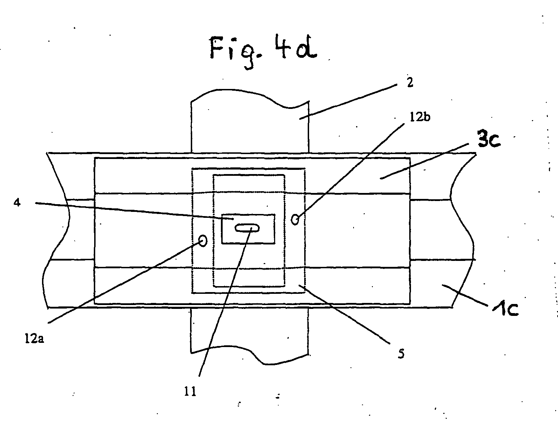

Die in Figur 4 gezeigte Haltekonsole 3b sitzt auf einem Wellblech - Dach 1b auf und ist auf dem Dach durch Befestigungsschrauben 6c und 6d fest angebracht, welche in einem nicht von der Aufnahmekammer 5 eingenommenen Bereich der Haltekonsole vorgesehen sind. Auf das Eindrehen von Befestigungsschrauben durch die obere Wandung der Aufnahmekammer 5 wurde hier verzichtet. Wie diese Figur zeigt, ist die Haltekonsole sattelförmig ausgebildet mit zwei Seitenschenkeln und einem die beiden Seitenschenkel an ihren oberen Enden verbindenden Jochteil, an dem die nach oben vorstehende Aufnahmekammer 5 vorgesehen ist. Der an dieser Aufnahmekammer angebrachte Haltewinkel 4 weist dabei eine Bohrung 11 zum Anschrauben des zu haltenden Gegenstandes auf.

In ähnlicher Weise zeigen die Figuren 4a - 4d eine sattelförmige Haltekonsole 3c, die auf einem Trapezblech - Dach 1c aufsitzt und mittels Befestigungsschrauben 6a und 6b im Dachbalken 2 verankert ist. Diese Befestigungsschrauben sind durch die Wandung der Aufnahmekammer 5 in schräger Anordnung nach innen und unten hindurchgeführt, wie dies auch bei den Ausführungsformen gemäß den Figuren 2 und 3a sowie 3b der Fall ist. Zwischen dem äußeren Randbereich der sattelförmigen Haltekonsole 3c und dem Trapezblech - Dach 1c ist eine umlaufende Dichtung 7d vorgesehen, welche die Konsole gegen das Dach abdichtet. Wie Figur 4c zeigt, ist die Größe der Aufnahmekammer 5 so bemessen, dass deren Innenwand den Kopf einer Dachbefestigungsschraube 8 mit zusätzlich darunter liegender Haltekalotte 9b aufnehmen kann. Um einen möglichst gleichmäßigen Anpressdruck auf die Haltekonsole 3c in Richtung zum Trapezblech - Dach 1c zu erhalten, sind die in der Aufnahmekammer 5 vorgesehenen und in Figur 4d mit dem Bezugszeichen 12a und 12b bezeichneten Bohrlöcher für die Befestigungsschrauben 6a und 6b diagonal gegeneinander versetzt, wie dies auch bei den Ausführungsformen von Figur 1a, 1b, 2, 3a und 3b der Fall ist.

Figur 5 zeigt eine den Figuren 4a - 4d ganz ähnliche sattelförmige Haltekonsole 3c auf einem Trapezblech - Dach 1c, wobei aber diese Haltekonsole nicht durch Befestigungsschrauben innerhalb der Aufnahmekammer 5, sondern durch Befestigungsschrauben 6c und 6d im aufnahmekammerfreien Bereich der Haltekonsole am Dach fest gemacht ist. Außerdem ist diese Haltekonsole entsprechend der Ausführungsform der Figuren 3a 3b mit einem Gewindebolzen 16 zur Anpassung an unterschiedliche Montagehöhen der Dachbefestigungsschrauben 8 versehen.

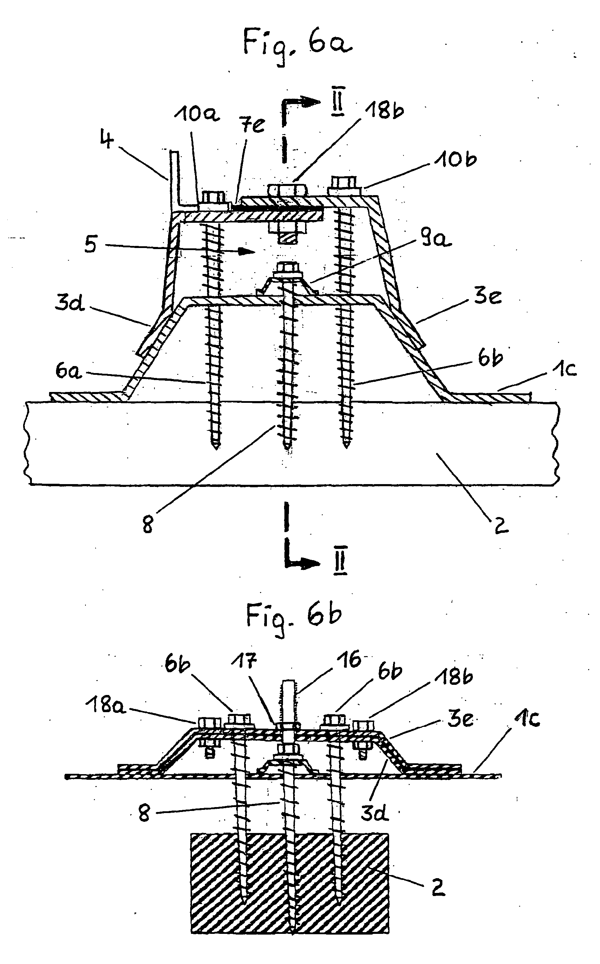

In den Figuren 6a und 6b ist eine sattelförmige Haltekonsole auf einem Trapezblech - Dach 1c gezeigt, welche zur Anpassung an unterschiedliche Trapezbreiten aus zwei sich mit ihren Jochteilen überlappenden Teilhälften 3d und 3e besteht. Diese Teilhälften sind quer zur Längserstreckung des Trapezbleches 1c gegeneinander verschiebbar und können in ihrer eingestellten Lage durch zwei in Langlöchern laufende Spannschrauben 18a und 18b miteinander verspannt werden. Zwischen den Jochteilen der beiden Teilhälften 3d und 3e ist eine Dichtung 7e vorgesehen, welche die Haltekonsole gegen Regenwasser nach innen abdichtet. Zur Befestigung der Haltekonsole sind auch hier Befestigungsschrauben 6a und 6b vorgesehen, die durch entsprechende Bohrungen in den beiden Teilhälften 3d und 3e sowie im Trapezblech 1c parallel zur Längsachse der Dachbefestigungsschraube 8 hindurchgeführt und in den Dachbalken 2 eingedreht sind. Dichtungen 10a und 10b zwischen den Köpfen der Befestigungsschrauben 6a, 6b und der Oberseite der beiden Teilhälften 3d, 3e dichten diese Schrauben an den Wanddurchbohrungen ab. Ein Haltewinkel 4 für den zu haltenden Gegenstand ist hier an der unteren Teilhälfte 3d befestigt.

Wie in Figur 6a dargestellt wird die Aufnahmekammer 5, welche den Kopf der Dachbefestigungsschraube 8 mit darunterliegender Haltekalotte 9a aufnimmt, durch die oberen verlängerten Enden der Seitenschenkel sowie der übereinander liegenden und gegeneinander verspannbaren Jochteile der beiden Teilhälften 3d und 3e gebildet. Dieser Innenraum der Aufnahmekammer ist in Figur 6a im Vergleich zur Darstellung gemäß Figur 6b übertrieben groß gezeichnet, um die konstruktiven Gegebenheiten besser veranschaulichen zu können. Für den gleichen Zweck wurde in Figur 6a der in Figur 6b gezeigte Gewindebolzen 16 weggelassen. Dieser Gewindebolzen, der die gleiche Aufgabe wie bei den vorher beschriebenen Ausführungsformen hat, wird durch das Jochteil der einen Teilhälfte, vorzugsweise durch das obere Jochteil hindurchgeschraubt, während das andere Jochteil, vorzugsweise das untere Jochteil, ein sich in Verschieberichtung der Teilhälften 3d bzw. 3e erstreckendes Langloch aufweist, dessen Innenweite mindestens gleich dem Gewindeaußendurchmesser des Gewindebolzens 16 entspricht und durch das sich der Gewindebolzen hindurcherstreckt, um auf dem Kopf der Dachbefestigungsschraube 8 aufsitzen zu können. Auf diese Weise können die beiden Teilhälften trotz des Vorhandenseins des Gewindebolzens 16 zur Anpassung an verschiedene Trapezblech - Breiten gegeneinander verschoben und anschließend durch Anziehen der Spannschrauben 18a und 18b zur Schaffung einer gemeinsamen Haltekonsole fest miteinander verbunden werden.

Sollten die Befestigungsschrauben 6a und 6b im Gegensatz zu der in Figur 6a gezeigten Position nach Innen in den Überlappungsbereich der Jochteile der beiden Teilhälften 3d und 3e versetzt sein, müssten zumindest in dem einen Jochteil ebenfalls entsprechende Langlöcher vorgesehen werden, um die Teilhälften gegeneinander verschieben zu können.

Es sei noch bemerkt, dass die Aufnahmekammer bei einer erfindungsgemäßen Haltekonsole einstückig z.B. in Form einer Auswölbung oder als getrenntes Bauteil ausgeführt sein kann, welches an den Konsolenkörper nachträglich z.B. durch Anschweißen befestigt wird. Dabei kann die Haltekonsole aus Edelstahl verzinktem Eisen oder Aluminium ausgeführt sein. Ferner können die Haltekonsole bzw. die diese Haltekonsole bildenden beiden Teilhälften jeweils aus ein aus einem Stück gepresstes Bauteil hergestellt sein.

Obwohl vorstehend Blechdächer diskutiert wurden, kann das Dach auch aus einem anderen ähnlichen Material wie z.B. aus Kunststoff bestehen, da letzteres Material insbesondere bei Wellblech - und Trapezblech - Dächern Verwendung findet.

## Patentansprüche

1. Dach-Befestigungsvorrichtungs-Kombination, umfassend ein Blechdach, mindestens einen unter dem Blechdach positionierten Dachbalken sowie eine Befestigungsvorrichtung zum Befestigen des Blechdaches und eines darauf positionierten Gegenstandes, insbesondere eines Solarmoduls oder einer Fotovoltaikanlage, wobei die Befestigungsvorrichtung mindestens ein Dachbefestigungselement (8) mit einem Kopf umfasst, mittels dessen das Blechdach an dem mindestens einen Dachbalken (2) befestigt ist, wobei der Kopf des in den Dachbalken eingetriebenen Dachbefestigungselements von der Außenfläche des Blechdaches (1a, 1b, 1c) nach oben vorsteht, wobei die Befestigungsvorrichtung ferner eine auf das Blechdach aufgesetzte und mittels mindestens eines stiftförmigen Befestigungselements (6a-6d) am Dach angebrachte Haltekonsole (3a-3b) umfasst, an der ein Halteelement (4) zum Verankern des zu befestigenden Gegenstandes vorgesehen ist und deren Profil im Querschnitt gesehen demjenigen des Daches entspricht, **dadurch gekennzeichnet, dass** die Haltekonsole eine nach oben vorstehende Aufnahmekammer (5) aufweist, die bis auf eine oder mehrere vorgesehene Bohrungen zum Hindurchführen des oder der stiftförmigen Befestigungselemente (6a und 6b) umfangseitig oder an der Oberseite geschlossen ist und bei auf das Dach aufgesetzter Haltekonsole zum Aufnehmen des Kopfes des Dachbefestigungselementes (8) vorgesehen ist, und dass zum Anbringen der Haltekonsole am Dach das oder die stiftförmigen Befestigungselemente durch die Wandung der Aufnahmekammer hindurch in den gleichen Dachbalken eingetrieben sind, in welchem bereits das Dachbefestigungselement verankert ist.

2. Dach-Befestigungsvorrichtungs-Kombination nach Anspruch 1,
**dadurch gekennzeichnet, dass** die Wandung der Aufnahmekammer (5) zum Hindurchführen des oder der stiftförmigen Befestigungselemente (6a und 6b) entsprechende Bohrungen aufweist.

3. Dach-Befestigungsvorrichtungs-Kombination nach Anspruch 1 oder 2, **dadurch gekennzeichnet, dass** bei durch das oder die stiftförmigen Befestigungselemente (6a-6d) am Dach (1a-1c) angebrachter Haltekonsole (3a-3e) zwischen dem Kopf des von der Aufnahmekammer (5) aufgenommenen Dachbefestigungselementes (8) und der oberen Innenfläche der Aufnahmekammer (5) ein Abstand vorhanden ist.

4. Dach-Befestigungsvorrichtungs-Kombination nach Anspruch 1 oder 2, **dadurch gekennzeichnet, dass** bei durch das oder die stiftförmigen Befestigungselemente (6a-6d) am Dach (1a-1c) angebrachter Haltekonsole (3a-3e) dieselbe sich mit einer dem Dach zugewandten Abstützfläche auf dem Kopf des von der Aufnahmekammer (5) aufgenommenen Dachbefestigungselementes (8) abstützt.

5. Dach-Befestigungsvorrichtungs-Kombination nach Anspruch 4,
**dadurch gekennzeichnet, dass** die Abstützfläche durch die obere Innenfläche der Aufnahmekammer (5) gebildet ist.

6. Dach-Befestigungsvorrichtungs-Kombination nach Anspruch 4,
**dadurch gekennzeichnet, dass** die Abstützfläche durch die vordere Stirnfläche eines von oben durch die obere Wandung der Aufnahmekammer (5) eingeschraubten Gewindebolzens (16) gebildet ist, wobei durch Variation der Einschraubtiefe unterschiedliche Kopfhöhen des Dachbefestigungselementes (8) ausgleichbar sind.

7. Dach-Befestigungsvorrichtungs-Kombination nach Anspruch 6,
**gekennzeichnet durch** eine an der oberen Wandung der Aufnahmekammer (5) angebrachte Gewindemutter (17) **durch** die der Gewindebolzen (16) hindurchschraubbar und **durch** eine axial deckungsgleiche Bohrung in der oberen Wandung der Aufnahmekammer (5) hindurchführbar ist, wobei der Durchmesser dieser Bohrung mindestens gleich dem Gewindeaußendurchmesser des Gewindebolzens (16) ist.

8. Dach-Befestigungsvorrichtungs-Kombination nach Anspruch 6 oder 7, **gekennzeichnet durch** eine Stopp-Mutter, die von oben auf den Gewindebolzen (16) aufschraubbar und in der eingestellten Position desselben auf dem Gewindebolzen festziehbar ist.

9. Dach-Befestigungsvorrichtungs-Kombination nach einem oder mehreren der Ansprüche 3 - 8, **dadurch gekennzeichnet, dass** die am Dach angebrachte Konsole (3a - 3e) zumindest an ihrem Randbereich direkt auf dem Dach aufruht, wobei an der stirnseitigen äußeren Randkante der Haltekonsole (3a - 3e) eine die Konsole gegen das Dach abdichtende Dichtung (7b) vorgesehen ist.

10. Dach-Befestigungsverrichtungs-Kombination nach einem oder mehreren der Ansprüche 3 - 8, **dadurch gekennzeichnet, dass** zwischen dem äußeren Randbereich der am Dach (1a - 1c) angebrachten Haltekonsole (3a - 3e) und dem Dach selbst eine Dichtung (7a, 7c, 7d) vorgesehen ist.

11. Dach-Befestigungsvorrichtungs-Kombination nach einem oder mehreren der Ansprüche 4 - 8, **dadurch gekennzeichnet, dass** zwischen dem äußeren Randbereich der auf das Dach (1a - 1c) aufgesetzten Haltekonsole (3a - 3e) und dem Dach selbst eine zusammendrückbare Dichtung (7c) vorgesehen ist, deren Dicke so bemessen ist, dass bei noch nicht eingetriebenem oder noch nicht eingetriebenen Befestigungselementen (6a - 6d) die Dichtung die Abstützfläche an der Aufnahmekammer (5) der Haltekonsole (3a - 3e) oberhalb des Kopfes des Dachbefestigungselementes (8) in einem Abstand hält, der sich bei eingetriebenem Befestigungselement oder Befestigungselementen (6a - 6d) aufgrund der zusammengedrückten Dichtung (7c) auf Null reduziert, sodass die Abstützfläche dann auf dem Kopf des von der Aufnahmekammer (5) aufgenommenen Dachbefestigungselementes (8) aufruht.

12. Dach-Befestigungsvorrichtungs-Kombination nach einem oder mehreren der Ansprüche 1 - 11, wobei das Dach ein Wellblech - (1b) oder Trapezblech-Dach (1c) ist, **gekennzeichnet durch** eine sattelförmige Haltekonsole (3b - 3e) mit zwei Seitenschenkeln (3d - 3e) und einem die beiden Seitenschenkel an ihren oberen Enden verbindenden Jochteil, sowie einer nach oben vorstehenden Aufnahmekammer (5).

13. Dach-Befestigungsvorrichtungs-Kombination nach Anspruch 12, wobei das Dach ein Trapezblech - Dach (1c) ist, **dadurch gekennzeichnet, dass** zur Anpassung an unterschiedliche Trapezbreiten die sattelförmige Haltekonsole aus zwei sich mit ihren Jochteilen überlappenden Teilhälften (3d und 3e) besteht, die quer zur Längserstreckung des Trapezbleches (1c) gegeneinander verschiebbar und in ihrer eingestellten Lage miteinander verspannbar sind, wobei die sich überlappenden Jochteile zusammen mit den oberen Enden der Seitenschenkel der beiden Teilhälften (3d und 3e) die nach oben vorstehende Aufnahmekammer (5) bilden.

14. Dach-Befestigungsvorrichtungs-Kombination nach Anspruch 13 in Kombination mit einem oder mehreren der Ansprüche 6 - 8, **dadurch gekennzeichnet, dass** der Gewindebolzen (16) durch das Jochteil der einen Teilhälfte (3e), vorzugsweise durch das obere Jochteil, hindurchschraubbar ist, während das andere Jochteil, vorzugsweise das untere Jochteil, ein sich in Verschieberichtung der Teilhälften (3d und 3e) erstreckendes Langloch aufweist, dessen Innenweite mindestens gleich dem Gewindeaußendurchmesser des Gewindebolzens (16) entspricht und durch das sich der Gewindebolzen hindurcherstreckt.

15. Dach-Befestigungsvorrichtungs-Kombination nach einem oder mehreren der Ansprüche 12 - 14 in Kombination mit einem oder mehreren der Ansprüche 9 - 11, **dadurch gekennzeichnet, dass** jeweils eine Dichtung (7d) nur an den beiden sich in Längserstreckung des Well (1b) - oder Trapez-Bleches (1c) gesehen gegenüberliegenden äußeren Randbereichen der sattelförmigen Haltekonsole (3b - 3e) vorgesehen ist.

16. Dach-Befestigungsvorrichtungs-Kombination nach Anspruch 15, **dadurch gekennzeichnet, dass** sich die Dichtungen (7d) auch längs des äußeren Randbereiches der beiden Seitenschenkel der sattelförmigen Haltekonsole (3b - 3e) erstrecken.

17. Dach-Befestigungsvorrichtungs-Kombination nach einem oder mehreren der Ansprüche 1 - 16, **dadurch gekennzeichnet, dass** zum Anbringen der Haltekonsole (3a, 3c - 3e) an das Dach (1a, 1c) zwei stiftförmige Befestigungselemente (6a und 6b) vorgesehen sind, die gegenüber dem Dachbefestigungselement (8) in diagonal versetzter Anordnung von oben durch die Aufnahmekammer (5) in den Dachbalken (2) eingetrieben sind.

18. Dach-Befestigungsvorrichtungs-Kombination nach Anspruch 17, **dadurch gekennzeichnet, dass** die Eintreiberichtung der beiden Befestigungselemente (6a und 6b) parallel zur Längsachse des Dachbefestigungselementes (8) verläuft.

19. Dach-Befestigungsvorrichtungs-Kombination nach Anspruch 17, **dadurch gekennzeichnet, dass** die Eintreiberichtung der beiden Befestigungselemente (6a und 6b) schräg zur Längsachse des Dachbefestigungselementes (8) von oben nach unten und innen in zueinander im Abstand parallelen Ebenen verläuft.

20. Dach-Befestigungsvorrichtungs-Kombination nach einem oder mehreren der Ansprüche 1 - 19, **dadurch gekennzeichnet, dass** die Größe der Aufnahmekammer (5) so bemessen ist, dass deren Innenwand den Kopf einer Dachbefestigungsschraube (8) mit darunterliegender Kalotte (9a, 9b) in Abstand umgibt.

21. Dach-Befestigungsvorrichtungs-Kombination nach einem oder mehreren der Ansprüche 1 - 20, **dadurch gekennzeichnet, dass** die Haltekonsole (3a - 3e) aus Edelstahl, verzinktem Eisen oder Aluminium ausgeführt ist.

22. Dach-Befestigungsvorrichtungs-Kombination nach einem oder mehreren der Ansprüche 1 - 21, **dadurch gekennzeichnet, dass** die Haltekonsole (3a - 3c) bzw. die die Haltekonsole bildenden beiden Teilhälften (3d und 3e) jeweils als ein aus einem Stück gepresstes Bauteil ausgeführt sind.

23. Verfahren zum Befestigen mindestens eines Gegenstandes, insbesondere eines Solarmoduls oder einer Photovoltaikanlage auf einem Blechdach, insbesondere auf einem Trapezblechdach (1c) oder einem Wellblechdach (1b) oder einem Flachdach (1a), das mittels Dachbefestigungselementen, insbesondere mittels Dachbefestigungsschrauben und gegebenenfalls von den Dachbefestigungsschrauben durchdrungener und gegen das Dach gedrückter Haltekalotten (9a, 9b) am Dachbalken befestigt ist, wobei die Köpfe der in den Dachbalken eingetriebenen Dachbefestigungselemente von der Außenfläche des Dachbleches nach oben vorstehen, **gekennzeichnet durch** folgende Schritte:
a) Positionieren einer Haltekonsole (3a bis 3e), an der ein Halteelement (4) zum Verankern des zu befestigenden Gegenstandes vorgesehen ist, deren Profil im Querschnitt gesehen demjenigen des Daches (1a bis 1c) entspricht und die eine bis auf eine oder mehrere gegebenenfalls vorgesehene Bohrungen zum Hindurchführen des oder der stiftförmigen Befestigungselemente (6a und 6b) umfangseitig und an der Oberseite geschlossene Aufnahmekammer (5) zur Aufnahme eines Kopfes eines Dachbefestigungselements aufweist, am Blechdach in einer solchen Stellung, dass der Kopf eines Dachbefestigungselementes (8) in der Aufnahmekammer aufgenommen wird;
b) Befestigen der Haltekonsole mittels mindestens eines stiftförmigen Befestigungselements (6a bis 6d), welches **durch** die Wandung der Aufnahmekammer hindurch in den gleichen Dachbalken, in welchem bereits das Dachbefestigungselement (8) verankert ist, eingetrieben wird;
c) Befestigen des zu befestigenden Gegenstandes am Halteelement.

## Claims

1. Combination of a fastening device with a roof, comprising a sheet-metal roof, at least one roof beam positioned under the sheet-metal roof, and a fastening device for the fastening of the sheet-metal roof and an object positioned thereon, in particular a solar module or a photovoltaic installation, wherein the fastening device comprises at least one roof fastening element (8) with a head, by means of which the sheet-metal roof is fastened to the at least one roof beam (2), wherein the head of the roof fastening element which is driven into the roof beam protrudes upwards from the outer surface of the sheet-metal roof (1a, 1b, 1c), wherein the fastening device furthermore comprises a retaining bracket (3a-3b) which is placed onto the sheet-metal roof, is attached to the roof by means of at least one pin-shaped fastening element (6a-6d) and on which a retaining element (4) is provided for anchoring the object to be fastened and the profile of which, as seen in cross section, corresponds to that of the roof, **characterized in that** the retraining bracket has an upwardly protruding receiving chamber (5) which is closed circumferentially or on the upper side apart from one or more bores provided for the passage of the pin-shaped fastening element(s) (6a and 6b) and is provided for receiving the head of the roof fastening element (8) when the retaining bracket is placed onto the roof, and **in that**, in order to attach the retaining bracket to the roof, the pin-shaped fastening element(s) is or are driven through the wall of the receiving chamber into the same roof beam in which the roof fastening element has already been anchored.

2. Combination of a fastening device with a roof according to Claim 1, **characterized in that** the wall of the receiving chamber (5) has corresponding bores for the passage of the pin-shaped fastening element(s) (6a and 6b).

3. Combination of a fastening device with a roof according to Claim 1 or 2, **characterized in that**, with the retaining bracket (3a-3e) attached to the roof (1a-1c) by the pin-shaped fastening element(s) (6a-6d), there is a spacing between the head of the roof fastening element (8), which is received by the receiving chamber (5), and the upper inner surface of the receiving chamber (5).

4. Combination of a fastening device with a roof according to Claim 1 or 2, **characterized in that**, with the retaining bracket (3a-3e) attached to the roof (1a-1c) by the pin-shaped fastening element(s) (6a-6d), said retaining bracket is supported by a supporting surface, which faces the roof, on the head of the roof fastening element (8), which is received by the receiving chamber (5).

5. Combination of a fastening device with a roof according to Claim 4, **characterized in that** the supporting surface is formed by the upper inner surface of the receiving chamber (5).

6. Combination of a fastening device with a roof according to Claim 4, **characterized in that** the supporting surface is formed by the front end surface of a threaded bolt (16) screwed through the upper wall of the receiving chamber (5) from above, wherein different head heights of the roof fastening element (8) can be compensated for by varying the screwing-in depth.

7. Combination of a fastening device with a roof according to Claim 6, **characterized by** a threaded nut (17) which is attached to the upper wall of the receiving chamber (5) and through which the threaded bolt (16) can be screwed and can be guided through an axially congruent bore in the upper wall of the receiving chamber (5), wherein the diameter of said bore is at least identical to the outside diameter of the threaded bolt (16).

8. Combination of a fastening device with a roof according to Claim 6 or 7, **characterized by** a stop nut which is screwable onto the threaded bolt (16) from above and is tightenable on the threaded bolt in the set position thereof.

9. Combination of a fastening device with a roof according to one or more of Claims 3-8, **characterized in that** at least the edge region of the bracket (3a-3e) attached to the roof rests directly on the roof, wherein a seal (7b) which seals the bracket against the roof is provided on the end outer edge of the retaining bracket (3a-3e).

10. Combination of a fastening device with a roof according to one or more of Claims 3-8, **characterized in that** a seal (7a, 7c, 7d) is provided between the outer edge region of the retaining bracket (3a-3e) attached to the roof (1a-1c) and the roof itself.

11. Combination of a fastening device with a roof according to one or more of Claims 4-8, **characterized in that** a compressible seal (7c) is provided between the outer edge region of the retaining bracket (3a-3e) placed onto the roof (1a-1c) and the roof itself, the thickness of which seal is dimensioned in such a manner that, with the fastening element (s) (6a- 6d) not yet driven in, the seal holds the supporting surface on the receiving chamber (5) of the retaining bracket (3a-3e) above the head of the roof fastening element (8) at a distance which, when the fastening element or fastening elements (6a-6d) is or are driven in, is reduced to zero owing to the compressed seal (7c) such that the supporting surface then rests on the head of the roof fastening element (8) received by the receiving chamber (5) .

12. Combination of a fastening device with a roof according to one or more or Claims 1-11, wherein the roof is a corrugated sheet-metal roof (1b) or a sheet-metal roof with trapezoidal corrugations (1c), **characterized by** a saddle-shaped retaining bracket (3b-3e) with two side limbs (3d-3e) and a yoke part connecting the upper ends of the two side limbs, and an upwardly protruding receiving chamber (5).

13. Combination of a fastening device with a roof according to Claim 12, wherein the roof is a sheet-metal roof with trapezoidal corrugations (1c), **characterized in that**, for adaptation to different widths of the trapezoidal corrugations, the saddle-shaped retaining bracket consists of two sectional halves (3d and 3e) which overlap by the yoke parts thereof, can be displaced in relation to each other transversely with respect to the longitudinal extent of the sheet metal with trapezoidal corrugations (1c) and, in the set position thereof, can be braced together, wherein the overlapping yoke parts together with the upper ends of the side limbs of the two sectional halves (3d and 3e) form the upwardly protruding receiving chamber (5).

14. Combination of a fastening device with a roof according to Claim 13 in combination with one or more of Claims 6-8, **characterized in that** the threaded bolt (16) can be screwed through the yoke part of the one sectional half (3e), preferably through the upper yoke part, while the other yoke part, preferably the lower yoke part, has an elongated hole which extends in the direction of displacement of the sectional halves (3d and 3e) and the inside width of which corresponds at least identically to the outside diameter of the threaded bolt (16) and through which the threaded bolt extends.

15. Combination of a fastening device with a roof according to one or more of Claims 12-14 in combination with one or more of Claims 9-11, **characterized in that** a seal (7d) is provided in each case only on the two opposite, outer edge regions of the saddle-shaped retaining bracket (3b-3e), as seen in the longitudinal extent of the corrugated sheet metal (1b) or sheet metal with trapezoidal corrugations (1c).

16. Combination of a fastening device with a roof according to Claim 15, **characterized in that** the seals (7d) also extend along the outer edge region of the two side limbs of the saddle-shaped retaining bracket (3b-3e).

17. Combination of a fastening device with a roof according to one or more of Claims 1-16, **characterized in that** two pin-shaped fastening elements (6a and 6b) are provided for attaching the retaining bracket (3a, 3c-3e) to the roof (1a, 1c), said fastening elements being driven through the receiving chamber (5) into the roof beam (2) from above in a diagonally offset arrangement in relation to the roof fastening element (8) .

18. Combination of a fastening device with a roof according to Claim 17, **characterized in that** the driving-in direction of the two fastening elements (6a and 6b) runs parallel to the longitudinal axis of the roof fastening element (8).

19. Combination of a fastening device with a roof according to Claim 17, **characterized in that** the driving-in direction of the two fastening elements (6a and 6b) runs obliquely with respect to the longitudinal axis of the roof fastening element (8) from the top downwards and inwards in planes which are parallel to each other at a distance.

20. Combination of a fastening device with a roof according to one or more of Claims 1-19, **characterized in that** the size of the receiving chamber (5) is dimensioned in such a manner that the inner wall thereof surrounds, at a distance, the head of a roof fastening screw (8) with a spherical cap (9a, 9b) located therebelow.

21. Combination of a fastening device with a roof according to one or more of Claims 1-20, **characterized in that** the retaining bracket (3a-3e) is formed from special steel, galvanized iron or aluminium.

22. Combination of a fastening device with a roof according to one or more of Claims 1-21, **characterized in that** the retaining bracket (3a-3c) and the two sectional halves (3d and 3e) forming the retaining bracket are each designed as a component pressed from a piece.

23. Method for fastening at least one object, in particular a solar module or a photovoltaic installation on a sheet-metal roof, in particular on a sheet-metal roof with trapezoidal corrugations (1c) or a corrugated sheet-metal roof (1b) or a flat roof (1a) which is fastened to the roof beam by means of roof fastening elements, in particular by means of roof fastening screws and optionally by spherical retaining caps (9a, 9b) which are penetrated by the roof fastening screws and are pressed against the roof, wherein the heads of the roof fastening elements driven into the roof beam protrude upwards from the outer surface of the roof sheet, **characterized by** the following steps:
a) positioning a retaining bracket (3a to 3e), on which a retaining element (4) is provided for anchoring the object to be fastened and the profile of which, as seen in cross section, corresponds to that of the roof (1a to 1c) and which has a receiving chamber (5), which is closed circumferentially and on the upper side except for one or more optionally provided bores for the passage of the pin-shaped fastening element(s) (6a and 6b), for receiving a head of a roof fastening element, on the sheet-metal roof in such a position that the head of a roof fastening element (8) is received in the receiving chamber;
b) fastening the retaining bracket by means of at least one pin-shaped fastening element (6a to 6d) which is driven through the wall of the receiving chamber into the same roof beam in which the roof fastening element (8) has already been anchored;
c) fastening the object to be fastened to the retaining element.

## Revendications

1. Combinaison d'un dispositif de fixation et d'un toit, comprenant un toit en tôle, au moins une poutre de toit positionnée sous le toit en tôle ainsi qu'un dispositif de fixation pour la fixation du toit en tôle et d'un objet positionné sur celui-ci, notamment d'un module solaire ou d'une installation photovoltaïque, le dispositif de fixation comprenant au moins un élément de fixation de toit (8) avec une tête, au moyen duquel la tôle de toit est fixée à l'au moins une poutre de toit (2), la tête de l'élément de fixation de toit de l'élément de fixation de toit enfoncé dans la poutre de toit faisant saillie vers le haut depuis la surface extérieure du toit en tôle (1a, 1b, 1c), le dispositif de fixation comprenant en outre une console de retenue (3a-3b) posée sur la tôle de toit et montée sur le toit au moyen d'au moins un élément de fixation (6a-6d) en forme de goupille, un élément de retenue (4) pour l'ancrage de l'objet à fixer étant prévu sur la console de retenue et son profilé en section transversale correspondant à celui du toit, **caractérisée en ce que** la console de retenue présente une chambre de réception (5) saillant vers le haut, qui est fermée du côté de la périphérie ou sur le côté supérieur à l'exception d'un ou de plusieurs alésages prévus pour le guidage à travers eux du ou des éléments de fixation (6a et 6b) en forme de goupille, et qui est prévue pour recevoir la tête de l'élément de fixation de toit (8) lorsque la console de retenue est posée sur le toit, et **en ce que** pour le montage de la console de retenue sur le toit, le ou les éléments de fixation en forme de goupille sont enfoncés à travers la paroi de la chambre de réception dans la même poutre de toit dans laquelle est déjà ancré l'élément de fixation de toit.

2. Combinaison d'un dispositif de fixation et d'un toit selon la revendication 1, **caractérisée en ce que** la paroi de la chambre de réception (5) présente des alésages correspondants pour guider à travers eux le ou les éléments de fixation (6a et 6b) en forme de goupille.

3. Combinaison d'un dispositif de fixation et d'un toit selon la revendication 1 ou 2, **caractérisée en ce que**, lorsque la console de retenue (3a-3e) est montée sur le toit (1a-1c) par le ou les éléments de fixation (6a-6d) en forme de goupille, il existe un espace entre la tête de l'élément de fixation de toit (8) reçu par la chambre de réception (5) et la surface intérieure supérieure de la chambre de réception (5).

4. Combinaison d'un dispositif de fixation et d'un toit selon la revendication 1 ou 2, **caractérisée en ce que** lorsque la console de retenue (3a-3e) est montée sur le toit (1a-1c) par le ou les éléments de fixation (6a-6d) en forme de goupille, celle-ci s'appuie avec une surface d'appui tournée vers le toit sur la tête de l'élément de fixation de toit (8) reçu par la chambre de réception (5).

5. Combinaison d'un dispositif de fixation et d'un toit selon la revendication 4, **caractérisée en ce que** la surface d'appui est formée par la surface intérieure supérieure de la chambre de réception (5).

6. Combinaison d'un dispositif de fixation et d'un toit selon la revendication 4, **caractérisé en ce que** la surface d'appui est formée par la surface frontale d'un boulon fileté (16) vissé par le haut à travers la paroi supérieure de la chambre de réception (5), différentes hauteurs de tête de l'élément de fixation de toit (8) pouvant être compensées par la variation de la profondeur de vissage.

7. Combinaison d'un dispositif de fixation et d'un toit selon la revendication 6, **caractérisée par** un écrou fileté (17) monté sur la paroi supérieure de la chambre de réception (5), à travers lequel le boulon fileté (16) peut être vissé, et peut être guidé à travers un alésage en coïncidence axiale dans la paroi supérieure de la chambre de réception (5), le diamètre de cet alésage étant au moins égal au diamètre extérieur du filetage du boulon fileté (16).

8. Combinaison d'un dispositif de fixation et d'un toit selon la revendication 6 ou 7, **caractérisée par** un écrou d'arrêt, qui peut être vissé par le dessus sur le boulon fileté (16) et qui peut être serré sur le boulon fileté dans la position ajustée de ce dernier.

9. Combinaison d'un dispositif de fixation et d'un toit selon l'une quelconque ou plusieurs des revendications 3 à 8, **caractérisée en ce que** la console (3a - 3e) montée sur le toit repose au moins au niveau de sa région de bord directement sur le toit, un joint d'étanchéité (7b) étanchant la console vis-à-vis du toit étant prévu sur l'arête de bord extérieure frontale de la console de retenue (3a- 3e).

10. Combinaison d'un dispositif de fixation et d'un toit selon l'une quelconque ou plusieurs des revendications 3 à 8, **caractérisée en ce qu'**un joint d'étanchéité (7a, 7c, 7d) est prévu entre la région de bord extérieure de la console de retenue (3a - 3e) montée sur le toit (1a - 1c) et le toit lui-même.

11. Combinaison d'un dispositif de fixation et d'un toit selon l'une quelconque ou plusieurs des revendications 4 à 8, **caractérisée en ce qu'**un joint d'étanchéité (7c) compressible est prévu entre la région de bord extérieure de la console de retenue (3a - 3e) posée sur le toit (1a - 1c) et le toit lui-même, l'épaisseur du joint d'étanchéité étant dimensionné de telle sorte que, lorsque l'élément ou les éléments de fixation (6a - 6d) ne sont pas encore enfoncés, le joint d'étanchéité retienne la surface d'appui au niveau de la chambre de réception (5) de la console de retenue (3a - 3e) au-dessus de la tête de l'élément de fixation de toit (8) à une distance qui se réduit à zéro lorsque l'élément de fixation ou les éléments de fixation (6a - 5d) sont enfoncés, en raison du joint d'étanchéité comprimé (7c), de sorte que la surface d'appui repose alors sur la tête de l'élément, de fixation de toit (8) reçu par la chambre de réception (5).

12. Combinaison d'un dispositif de fixation et d'un toit selon l'une quelconque ou plusieurs des revendications 1 à 11, le toit étant un toit en tôle ondulée (1b) ou un toit en tôle trapézoïdale (1c), **caractérisée par** une console de retenue (3b
3e) en forme de selle, avec deux branches latérales (3d - 3e) et une partie de joug reliant les deux branches latérales au niveau de leurs extrémités supérieures, ainsi qu'avec une chambre de réception (5) saillant vers le haut.

13. Combinaison d'un dispositif de fixation et d'un toit selon la revendication 12, le toit étant un toit en tôle trapézoïdale (1c), **caractérisée en ce que** pour l'adaptation à différentes largeurs du trapèze, la console de retenue en forme de selle se compose de deux moitiés partielles (3d et 3e) se chevauchant avec leurs parties de joug, lesquelles peuvent être déplacées transversalement à l'étendue longitudinale de la tôle trapézoïdale (1c) l'une par rapport à l'autre et peuvent être serrées l'une avec l'autre dans leur position ajustée, les parties de joug se chevauchant formant, conjointement avec les extrémités supérieures des branches latérales des deux moitiés partielles (3d et 3e) la chambre de réception saillant vers le haut (5).

14. Combinaison d'un dispositif de fixation et d'un toit selon la revendication 13 en combinaison avec une ou plusieurs des revendications 6 à 8, **caractérisée en ce que** le boulon fileté (16) peut être vissé à travers la partie de joug d'une moitié partielle (3e), de préférence à travers la partie de joug supérieure, tandis que l'autre partie de joug, de préférence la partie de joug inférieure, présente un trou oblong s'étendant dans la direction de déplacement des moitiés partielles (3d et 3e), dont la largeur intérieure correspond au moins au diamètre extérieur du filetage du boulon fileté (16) et à travers lequel s'étend le boulon fileté.

15. Combinaison d'un dispositif de fixation et d'un toit selon l'une quelconque ou plusieurs des revendications 12 à 14 en combinaison avec une ou plusieurs des revendications 9 à 11, **caractérisée en ce qu'**un joint d'étanchéité (7d) est prévu à chaque fois seulement sur les deux régions de bord extérieures opposées de la console de retenue (3b - 3e) en forme de selle, vu dans la direction longitudinale de la tôle ondulée (1b) ou trapézoïdale (1c).

16. Combinaison d'un dispositif de fixation et d'un toit selon la revendication 15, **caractérisée en ce que** les joints d'étanchéité (7d) s'étendent aussi le long de la région de bord extérieure des deux branches latérales de la console de retenue (3b - 3e) en forme de selle.

17. Combinaison d'un dispositif de fixation et d'un toit selon l'une quelconque ou plusieurs des revendications 1 à 16, **caractérisée en ce que**, pour le montage de la console de retenue (3a, 3c - 3e) sur le toit (1a, 1c), on prévoit deux éléments de fixation (6a et 6b) en forme de goupille, qui sont enfoncés par rapport à l'élément de fixation de toit (8) dans un agencement décalé en diagonale depuis le haut à travers la chambre de réception (5) dans la poutre de toit (2).

18. Combinaison d'un dispositif de fixation et d'un toit selon la revendication 17, **caractérisée en ce que** la direction d'enfoncement des deux éléments de fixation (6a et 6b) s'étend parallèlement à l'axe longitudinal de l'élément de fixation de toit (8).

19. Combinaison d'un dispositif de fixation et d'un toit selon la revendication 17, **caractérisée en ce que** la direction d'enfoncement des deux éléments de fixation (6a et 6b) s'étend obliquement par rapport à l'axe longitudinal de l'élément de fixation de toit (8) de haut en bas et vers
l'intérieur dans des plans parallèles espacés l'un de l'autre.

20. Combinaison d'un dispositif de fixation et d'un toit selon l'une quelconque ou plusieurs des revendications 1 à 19, **caractérisée en ce que** la dimension de la chambre de réception (5) est telle que sa paroi interne entoure à distance la tête d'une vis de fixation de toit (8) avec une calotte sous-jacente (9a, 9b).

21. Combinaison d'un dispositif de fixation et d'un toit selon l'une quelconque ou plusieurs des revendications 1 à 20, **caractérisée en ce que** la console de retenue (3a - 3e) est réalisée en acier noble, en fer galvanisé ou en aluminium.

22. Combinaison d'un dispositif de fixation et d'une toit selon l'une quelconque ou plusieurs des revendications 1 à 21, **caractérisée en ce que** la console de retenue (3a - 3c) ou les deux moitiés partielles (3d et 3e) formant la console de retenue, sont réalisées à chaque fois sous forme d'un composant pressé à partir d'une seule pièce.

23. Procédé de fixation d'au moins un objet, notamment un module solaire ou une installation photovoltaïque, sur un toit en tôle, en particulier sur un toit en tôle trapézoïdale (1c) ou un toit en tôle ondulée (1b) ou un toit plat (1a), qui est fixé sur la poutre de toit au moyen d'éléments de fixation de toit, en particulier au moyen de vis de fixation de toit et éventuellement de calottes de retenue (9a, 9b) traversées par les vis de fixation de toit et pressées contre le toit, les têtes des éléments de fixation de toit enfoncés dans les poutres de toit faisant saillie vers le haut depuis la surface extérieure de la tôle de toit, **caractérisé par** les étapes suivantes
a) positionnement d'une console de retenue (3a à 3e), sur laquelle est prévu un élément de retenue (4) pour ancrer l'objet à fixer, dont le profilé en section transversale correspond à celui du toit (1a à 1c), et laquelle présente une chambre de réception (5) pour recevoir une tête d'un élément de fixation de toit, laquelle chambre de réception est fermée du côté de la périphérie et sur le côté supérieur à l'exception d'un ou de plusieurs alésages éventuellement prévus pour le guidage à travers eux du ou des éléments de fixation (6a et 6b) en forme de goupille, sur le toit en tôle dans une position telle que la tête d'un élément de fixation de toit (8) soit reçue dans la chambre de réception ;
b) fixation de la console de retenue au moyen d'au moins un élément de fixation (6a à 6d) en forme de goupille, qui est enfoncé à travers la paroi de la chambre de réception dans la même poutre de toit dans laquelle est déjà ancré l'élément de fixation de toit (8) ; et
c) fixation de l'objet à fixer sur l'élément de retenue.
